# EUROPÄISCHE PATENTANMELDUNG

(11) **EP 4 632 903 A1**
(43) Veröffentlichungstag der Anmeldung: **15.10.2025**
(21) Anmeldenummer: 24169670.7
(22) Anmeldetag: 11.04.2024
(51) Int. Cl.: H01M 50/213, H01M 50/227, H01M 50/244, H01M 50/247, H01M 50/291, H01M 50/293

(54) **AKKUZELLENTRÄGER**

(71) Anmelder: Hilti Aktiengesellschaft, 9494 Schaan (LI)
(72) Erfinder: Horst, Jonas, 86199 Augsburg (DE); Schneider, Roland, 01217 Dresden (DE)
(74) Vertreter: Hilti Aktiengesellschaft Corporate Intellectual Property

(57) **Zusammenfassung**

Akkuzellenträger für ein Akkupack einer elektrischen Handwerkzeugmaschine, wobei der Akkuzellenträger aus Kunststoff besteht und mehrere zueinander parallel angeordnete Zylinderkammern aufweist in die jeweils eine zylindrische Akkuzelle in axialer Richtung eingeschobenen werden kann, wobei an einer inneren Mantelfläche einer jeden Zylinderkammer ein in radialer Richtung nach außen auslenkbares und jeweils einstückig mit dem Akkuzellenträger ausgebildetes Federelement zur Kompensation einer Toleranz zwischen Zylinderkammer und Akkuzelle angeordnet ist.

## Beschreibung

Die vorliegende Erfindung betrifft einen Akkuzellenträger für ein Akkupack einer elektrischen Handwerkzeugmaschine. Der Akkuzellenträger besteht aus Kunststoff und weist mehrere zueinander parallel angeordnete Zylinderkammern auf in die jeweils eine zylindrische Akkuzelle in axialer Richtung eingeschobenen werden kann.

Solche Akkuzellenträger sind grundsätzlich aus dem Stand der Technik bekannt, beispielsweise aus der DE 10 2016 203 431 A1. Der Akkuzellenträger schützt die Akkuzelle typischerweise gegen Stoßeinwirkung.

Es ist Aufgabe der vorliegenden Erfindung einen Akkuzellenträger bereitzustellen, der einfach und kostengünstig herstellbar ist.

Bezüglich des Akkuzellenträgers wird die Aufgabe dadurch gelöst, dass an einer inneren Mantelfläche einer jeden Zylinderkammer ein in radialer Richtung nach außen auslenkbares und jeweils einstückig mit dem Akkuzellenträger ausgebildetes Federelement zur Kompensation einer Toleranz zwischen Zylinderkammer und Akkuzelle angeordnet ist.

Die Erfindung hat den Vorteil, dass der Akkuzellenträger - trotz der Möglichkeit Toleranzen zwischen Zylinderkammer und Akkuzelle kompensieren zu können - einstückig verbleibt. Somit ist eine einfache und kostengünstige Herstellung, beispielsweise mittels Kunststoffspritzgießens, gewährleistet. Ein unerwünschter Press-Fit zwischen Zylinderkammer und Akkuzelle kann somit vermieden werden.

In einer bevorzugten Ausgestaltung ist eine jeweilige innere Mantelfläche der Zylinderkammer, abgesehen vom Federelement, unterbrechungsfrei ausgebildet. Es hat sich als vorteilhaft herausgestellt, wenn sich ein jeweiliges Federelement in axialer Richtung wenigstens über ein Drittel, vorzugsweise wenigstens über eine Hälfte der Länge der Zylinderkammer erstreckt.

In einer besonders bevorzugten Ausgestaltung ist für jedes Federelement ein außerhalb einer jeweiligen Zylinderkammer befindlicher Auslenkraum vorgesehen. Es hat sich als vorteilhaft herausgestellt, wenn der Auslenkraum durch einen Materialverzicht innerhalb des Akkuzellenträgers realisiert ist. In einer weiteren bevorzugten Ausgestaltung können sich zwei benachbarte Federelemente einen Auslenkraum teilen. Dies muss nicht notwendigerweise für alle benachbarten Federelemente der Fall sein. So kann beispielsweise vorgesehen sein, dass ein Akkuzellenträger insgesamt achtzehn Zylinderkammern aufweist, wobei sich sechs Paare benachbarter Zylinderkammern jeweils einen Auslenkraum teilen. In diesem Beispiel wären insgesamt sechs Auslenkräume vorgesehen. Die Auslenkräume müssen nicht notwendigerweise auf einer gleichen Einschubseite des Akkuzellenträgers angeordnet sein. Vielmehr können die Auslenkräume hälftig auf einer ersten Einschubseite des Akkuzellenträgers und hälftig auf einer der ersten Einschubseite gegenüberliegenden zweiten Einschubseite des Akkuzellenträgers angeordnet sein.

Es hat sich als vorteilhaft herausgestellt, wenn an einer jeden Zylinderkammer genau ein Federelement vorgesehen ist. Alternativ können an einer jeden Zylinderkammer genau zwei Federelemente vorgesehen sein. Ein Federelement kann sich ausgehend von der ersten Einschubseite des Akkuzellenträgers in die Zylinderkammer hinein erstrecken oder sich ausgehend von der zweiten Einschubseite des Akkuzellenträgers in die Zylinderkammer hinein erstrecken. Sofern pro Zylinderkammer genau zwei Federelemente vorgesehen sind, kann sich ein erstes der Federelemente ausgehend von der ersten Einschubseite des Akkuzellenträgers in die Zylinderkammer hinein erstrecken und sich ein zweites der Federelemente ausgehend von der zweiten Einschubseite des Akkuzellenträgers in die Zylinderkammer hinein erstrecken.

In einer besonders bevorzugten Ausgestaltung ist in jeder Zylinderkammer genau eine zylindrische Akkuzelle, vorzugsweise des Typs 21700, aufgenommen Es hat sich als vorteilhaft herausgestellt, wenn eine jede der zylindrischen Akkuzellen jeweils unmittelbar (abgesehen von etwaigen Lufteinschlüssen) von der inneren Mantelfläche der Zylinderkammer umgeben ist. So ist insbesondere vorgesehen, dass zwischen der zylindrischen Akkuzelle und der inneren Mantelfläche keine Elastomerteile oder dergleichen vorhanden sind.

In einer weiteren bevorzugten Ausgestaltung ist eine jeweilige Zylinderkammer in axialer Richtung länger oder zumindest ebenso lang, wie die aufgenommene zylindrische Akkuzelle. Es hat sich als vorteilhaft herausgestellt, wenn eine jeweilige Zylinderkammer in axialer Richtung, abgesehen vom Federelement, durchgängig ist.

Weitere Vorteile ergeben sich aus der folgenden Figurenbeschreibung. In der Figur ist ein besonders bevorzugtes Ausführungsbeispiel der vorliegenden Erfindung dargestellt. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

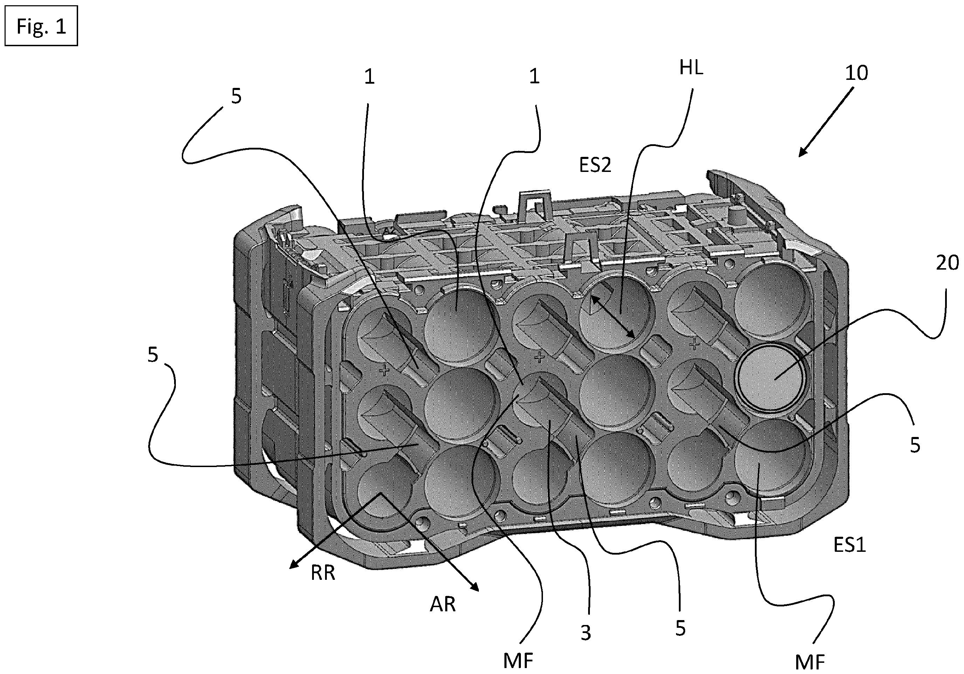

In der Figur sind gleiche und gleichartige Komponenten mit gleichen Bezugszeichen beziffert. Figur 1 zeigt ein erstes bevorzugtes Ausführungsbeispiel eines Akkuzellenträgers.

### Ausführungsbeispiel:

Ein besonders bevorzugtes Ausführungsbeispiel eines Akkuzellenträgers 10 ist in Figur 1 dargestellt. Der Akkuzellenträger 10 ist vorgesehen für ein Akkupack einer hier nicht dargestellten elektrischen Handwerkzeugmaschine. Der Akkuzellenträger 10 besteht aus Kunststoff und weist mehrere zueinander parallel angeordnete Zylinderkammern 1 auf. In jede der Zylinderkammern lässt sich jeweils genau eine zylindrische Akkuzelle 20 in axialer Richtung AR einschieben. Aus Darstellungsgründen ist nur eine zylindrische Akkuzelle 20 gezeigt. Die zylindrische Akkuzelle 20 ist beispielhaft vom Typ 21700.

Im vorliegend dargestellten Ausführungsbeispiel weist der Akkuzellenträger 10 genau achtzehn Zylinderkammern 1 auf, die spaltenweise antiparallel angeordnet sind. In neun der insgesamt achtzehn Zylinderkammern 1 lässt sich eine Akkuzelle 20 ausgehend von der ersten Einschubseite ES1 (Vorderseite) einschieben. In die verbleibenden neun Zylinderkammern 1 lässt sich eine Akkuzelle 20 ausgehend von der zweiten Einschubseite ES2 (Rückseite) einschieben.

Wie der Figur 1 entnommen werden kann, ist an einer inneren Mantelfläche MF der Zylinderkammern 1 jeweils ein in radialer Richtung RR nach außen auslenkbares und jeweils einstückig mit dem Akkuzellenträger 10 ausgebildetes Federelement 3 angeordnet. Das Federelement 3 dient zur Kompensation einer Toleranz zwischen Zylinderkammer 1 und Akkuzelle 20. Ein jeweiliges Federelement 3 erstreckt sich dabei beispielhaft in axialer Richtung AR wenigstens über eine halbe Länge HL der Zylinderkammer 1. Das Federelement 3 kann - unabhängig vom gezeigten Ausführungsbeispiel - grundsätzlich auch so dimensioniert sein, dass Akkuzellen unterschiedlichen Typs (multiple sourcing) im Akkuzellenträger 10 aufgenommen werden können.

Aufgrund der antiparallelen Anordnung der Zylinderkammern 1, erstrecken sich die Federelemente 3 der ersten, dritten und fünften Spalte (von links gesehen) ausgehend von der ersten Einschubseite ES1 in die jeweilige Zylinderkammer hinein. Die Federelemente 3 der zweiten, vierten und sechsten Spalte (von links gesehen) erstrecken sich ausgehend von der zweiten Einschubseite ES2 in die jeweilige Zylinderkammer hinein. Daher sind nicht alle Federelement der der zweiten, vierten und sechsten Spalte in Figur 1 erkennbar. Im Ausführungsbeispiel der Firma. 1 ist an einer jeden Zylinderkammer 1 genau ein Federelement 3 vorgesehen.

Eine jeweilige innere Mantelfläche MF der Zylinderkammer 1 ist, abgesehen vom Federelement 3, unterbrechungsfrei. Die jeweilige Zylinderkammer 3 ist in axialer Richtung AR, abgesehen vom Federelement 3, durchgängig. Eine jeweilige Zylinderkammer 3 in axialer Richtung AR länger oder zumindest ebenso lang ist, wie die aufgenommene zylindrische Akkuzelle 10.

Somit ist die zylindrische Akkuzelle 20 sicher in der Zylinderkammer 1 eingeschlossen. Dabei ist eine jede der zylindrischen Akkuzellen 20 jeweils unmittelbar von der inneren Mantelfläche MF der Zylinderkammer 3 umgeben, d.h. zwischen Akkuzelle und innerer Mantelfläche ist kein Elastomer oder dergleichen vorgesehen.

Für jedes Federelement 3 ist ein außerhalb einer jeweiligen Zylinderkammer 1 befindlicher Auslenkraum 5 vorgesehen, wobei der Auslenkraum 5 durch einen Materialverzicht innerhalb des Akkuzellenträgers 10 realisiert ist. Auf der in Figur 1 gut erkennbaren ersten Einschubseite ES1 sind insgesamt sechs Auslenkräume 5 vorgesehen, wobei sich drei Paar benachbarter Federelemente 1 jeweils einen Auslenkraum 5 teilen. Mit anderen Worten gibt es drei "gemeinschaftliche" Auslenkräume 5.

### Bezugszeichenliste

- 1: Zylinderkammer
- 3: Federelement
- 5: Auslenkraum
- 10: Akkuzellenträger
- 20: zylindrische Akkuzelle

- AR: axiale Richtung
- ES1: erste Einschubseite
- ES2: zweite Einschubseite
- HL: halbe Länge der Zylinderkammer
- MF: innere Mandelfläche
- RR: radiale Richtung

## Patentansprüche

1. Akkuzellenträger (10) für ein Akkupack einer elektrischen Handwerkzeugmaschine, wobei der Akkuzellenträger (10) aus Kunststoff besteht und mehrere zueinander parallel angeordnete Zylinderkammern (1) aufweist in die jeweils eine zylindrische Akkuzelle (20) in axialer Richtung (AR) eingeschobenen werden kann,
**dadurch gekennzeichnet, dass** an einer inneren Mantelfläche (MF) einer jeden Zylinderkammer (1) ein in radialer Richtung (RR) nach außen auslenkbares und jeweils einstückig mit dem Akkuzellenträger (10) ausgebildetes Federelement (3) zur Kompensation einer Toleranz zwischen Zylinderkammer (1) und Akkuzelle (20) angeordnet ist.

2. Akkuzellenträger (10) nach Anspruch 1,
**dadurch gekennzeichnet, dass** eine jeweilige innere Mantelfläche (MF) der Zylinderkammer (1), abgesehen vom Federelement (3), unterbrechungsfrei ist.

3. Akkuzellenträger (10) nach Anspruch 1 oder 2,
**dadurch gekennzeichnet, dass** sich ein jeweiliges Federelement (3) in axialer Richtung (AR) wenigstens über eine halbe Länge der Zylinderkammer (1) erstreckt.

4. Akkuzellenträger (10) nach einem der vorangehenden Ansprüche,
**dadurch gekennzeichnet, dass** für jedes Federelement (3) ein außerhalb einer jeweiligen Zylinderkammer (1) befindlicher Auslenkraum (5) vorgesehen ist, wobei der Auslenkraum (5) durch einen Materialverzicht innerhalb des Akkuzellenträgers (10) realisiert ist.

5. Akkuzellenträger (10) nach Anspruch 4,
**dadurch gekennzeichnet, dass** sich zwei benachbarte Federelemente (1, 1') einen Auslenkraum (5) teilen.

6. Akkuzellenträger (10) nach einem der vorangehenden Ansprüche,
**dadurch gekennzeichnet, dass** an einer jeden Zylinderkammer (1) entweder genau ein Federelement (3) vorgesehen ist, oder genau zwei Federelemente (3) vorgesehen sind.

7. Akkuzellenträger (10) nach einem der vorangehenden Ansprüche,
**dadurch gekennzeichnet, dass** in jeder Zylinderkammer (1) genau eine zylindrische Akkuzelle (20) aufgenommen ist.

8. Akkuzellenträger (10) nach Anspruch 7,
**dadurch gekennzeichnet, dass** eine jede der zylindrischen Akkuzellen (20) jeweils unmittelbar von der inneren Mantelfläche (MF) der Zylinderkammer (3) umgeben ist.

9. Akkuzellenträger (10) nach Anspruch 8,
**dadurch gekennzeichnet, dass** eine jeweilige Zylinderkammer (3) in axialer Richtung (AR) länger oder zumindest ebenso lang ist, wie die aufgenommene zylindrische Akkuzelle (10).

10. Akkuzellenträger (10) nach Anspruch 9,
**dadurch gekennzeichnet, dass** eine jeweilige Zylinderkammer (3) in axialer Richtung (AR), abgesehen vom Federelement (3), durchgängig ist.
